# EUROPÄISCHE PATENTSCHRIFT

(11) **EP 3 723 239 B1**
(45) Veröffentlichungstag und Bekanntmachung des Hinweises auf die Patenterteilung: **07.05.2025**
(21) Anmeldenummer: 20160916.1
(22) Anmeldetag: 04.03.2020
(51) Int. Cl.: H02J 13/00, H02J 3/14

(54) **ENERGIEMANAGEMENTSYSTEM ZUR STEUERUNG EINES HÄUSLICHEN ENERGIEVERBRAUCHS**
ENERGY MANAGEMENT SYSTEM FOR CONTROLLING DOMESTIC ENERGY CONSUMPTION
SYSTÈME DE GESTION D'ÉNERGIE PERMETTANT DE COMMANDER UNE CONSOMMATION D'ÉNERGIE DOMESTIQUE

(30) Priorität: 08.03.2019 DE 102019001641
(43) Veröffentlichungstag der Anmeldung: 14.10.2020
(73) Patentinhaber: Stiebel Eltron GmbH & Co. KG, 37603 Holzminden (DE)
(72) Erfinder: BAST, Oliver, 37603 Holzminden (DE); THIELE, Christian, 33098 Paderborn (DE)

(56) Entgegenhaltungen:
- EP-A1- 2 998 802
- DE-A1- 102010 017 264
- DE-A1- 102017 203 249
- US-A1- 2017 256 949

## Beschreibung

Die Erfindung betrifft ein Energiemanagementsystem gemäß dem Oberbegriff des Anspruchs 1 und ein Verfahren gemäss Anspruch 4 zur Steuerung der Energieaufnahme einer elektrischen Vorrichtung eines Energieverbrauchers in einem Energiemanagementsystem.

Markt bekannt sind Energiemanagementsysteme mit einem Datennetzwerk und wenigstens einem Energieverbraucher mit einem Energieerzeuger in ein Gebäudestromnetz. Das Gebäudestromnetz ist über einen an eine Anschlussleitung angeschlossenen Stromzähler mit einem Stromnetz verbunden ist. Der Energieerzeuger ist über einen Wechselrichter über eine Erzeugerleitung elektrisch an das Gebäudestromnetz eingebunden. Der Energieverbraucher ist mit einem elektrischen Verbraucheranschluss, der zwischen dem Wechselrichter und einem Stromzähler liegt, an das Gebäudestromnetz angeschlossen und ein Regler des Energieverbrauchers ist an das Datennetzwerk angeschlossen. Die DE 10 2010 017264 A offenbar ein Energie Management System für ein Haus.

Aufgabe der Erfindung ist es, eine kostengünstige Vorrichtung bereitzustellen, mit der von einem Energieerzeuger erzeugter Strom von einem Energieverbraucher zumindest teilweise genutzt wird.

Gelöst ist die Aufgabe durch ein Energiemanagementsystem gemäß den Merkmalen von Anspruch 1 und ein Verfahren gemäß den Merkmalen von Anspruch 4.

Ein Energiemessgerät ist mit einer Leistungsmesseinheit in die Anschlussleitung eingebunden und das Energiemessgerät ist mit einer ersten Datenverbindung mit dem Datennetzwerk verbunden.

Vorteilhaft ist das Energiemessgerät mit der ersten Datenverbindung an einen Internetkoppler, an den Router oder den Regler angeschlossen.

In einem anderen vorteilhaften Ausführungsbeispiel ist der Regler an den Internetkoppler, der Internetkoppler an den Router und das Energiemessgerät an den Router angeschlossen.

Gemäß dem erfindungsgemäßen Verfahren zur Steuerung der Energieaufnahme einer elektrischen Vorrichtung eines Energieverbrauchers mit einem Energiemanagementsystem wird im Energiemessgerät eine elektrische Leistung abhängig von einem Strom, der durch die Anschlussleitung fließt, ermittelt. Mit dem Energiemessgerät wird die im Gebäudestromnetz vom Energieerzeuger erzeugte Energie abzüglich der im Gebäudestromnetz verbrauchten Energie ermittelt. Bestimmt wird, ob ein Überschuss an Leistung, die vom Energieerzeuger in das Gebäudestromnetz eingespeist ist, besteht. Abhängig von einem Wert des Überschusses an Leistung wird die elektrische Vorrichtung mit dem Regler des Energieverbrauchers gesteuert.

Gemäß einem weiteren vorteilhaften Gedanken wird abhängig vom Wert des Überschusses an elektrischer Leistung, die elektrische Vorrichtung vom Regler so gesteuert, dass zumindest ein Anteil des Überschusses an elektrischer Leistung des Gebäudestromnetzes von der elektrischen Vorrichtung des Energieverbrauchers verbraucht wird.

Alternativ wird der elektrische Verbraucher betrieben, wenn Strom vom Gebäudestromnetz an das Stromnetz geliefert würde, womit zumindest weitgehend eine Einspeisung ins Stromnetz reduziert oder vermieden wird.

In einem vorteilhaften Verfahrensschritt wird ein Strombezug vom Stromnetz oder eine Stromlieferung an das Stromnetz mit dem Energiemanagementsystem, mit einer verfügbaren Leistungsspanne der elektrischen Vorrichtung, gegen null geregelt. Dabei wird ein Überschuss an elektrischer Leistung des Gebäudestromnetzes an die elektrische Vorrichtung abgegeben. Der Energieverbraucher ist insbesondere eine Wärmepumpe oder eine Elektroheizeinrichtung. Die Leistung des Energieverbrauchers wird so gewählt, dass die Stromlieferung an das Stromnetz gegen null geregelt ist, so dass eine Optimierung einer Einspeisung, insbesondere eine Minimierung einer Einspeisung ins Stromnetz erfolgt.

Mit einer vorteilhaften Verfügbarkeitsprognose von Überschuss an elektrischer Leistung im Energiemanagementsystem wird ein Stabilitätswert für einen zukünftigen Ertrag des Energieerzeugers ermittelt. Die Verfügbarkeitsprognose erfolgt insbesondere abhängig von historischen Energiewerten, die im Energiemessgerät ermittelt wurden und/oder abhängig von Wetterdaten. Abhängig von einem Vergleich des Stabilitätswertes ST mit einem Sollstabilitätswert wird die Leistung der elektrischen Vorrichtung vorgegeben, so dass ein störungsfreier Betrieb des Energieverbrauchers über ein Zeitintervall erfolgt.

Mit dem elektrischen Verbraucher wird abhängig vom Überschuss an elektrischer Leistung eine thermische Energie erzeugt. Insbesondere mit einer Rückwärtssteuerung, womit ein Sollwert an thermischer Energie oder eine Solltemperatur eines Heizsystems zu einem Endzeitpunkt eines Heizintervalls erreicht werden soll, wird die elektrische Vorrichtung dann eingeschaltet, wenn ein Zeitpunkt erreicht ist, von dem ab der zu erwartende Überschuss an elektrischer Leistung hinreichend ist, um die Menge an thermischer Energie oder die Solltemperatur zum Endzeitpunkt zu erreichen.

Vorteilhaft sind im Gebäudestromnetz noch weitere elektrische Verbraucher vorhanden, deren Stromverbrauch im Energiemessgerät berücksichtigt wird.

Im Energiemessgerät erfolgt vorteilhaft eine von Spannung und Strom abhängige Leistungsmessung. Werte der Leistungsmessung werden im Energiemanagementsystem gespeichert bzw. diesen bereitgestellt. Vorteilhaft erfolgt die Speicherung der Werte der Leistungsmessung in einem Datenspeicher des Energiemessgerätes, des Routers des Internetkopplers oder auch des Reglers. Alternativ ist es auch von Vorteil die Speicherung der Werte der Leistungsmessung in einem Server durchzuführen, der über den Router mit dem Energiemanagementsystem bzw. mit dem Datennetzwerk verbunden ist, wozu der Router vorteilhaft über das Internet mit dem Server verbunden ist.

Das Energiemanagementsystem wird vorteilhaft ohne einen Anschluss an das Internet betrieben. Dabei erfolgt insbesondere eine Messung der Leistung im Energiemessgerät. Im Energiemanagementsystem, vorteilhafter Weise im Energiemessgerät, dem Internetkoppler oder auch im Regler erfolgt ein Vergleich der gemessenen Leistung mit einem Sollwert wobei vorteilhaft eine Differenz des Sollwerts mit der gemessenen Leistung gleich oder nahe null liegen soll. Liegen positive Leistungswerte vor, so ist davon auszugehen, dass vom Gebäudestromnetz Strom an das Stromnetz abgegeben wird. Günstig für den Benutzer ist es, den insbesondere selbst von dem Energieerzeuger erzeugten Strom im Gebäudestromnetz zu nutzen. Sobald also positive Leistungswerte vorliegen, wird ermittelt, ob diese positiven Leistungswerte hinreichend sind um den Energieverbraucher bzw. die elektrische Vorrichtung des Energieverbrauchers zu betreiben.

Liegen vorteilhaft über eine vorgegebene Zeit hinreichende positive Leistungswerte vor kann eine Prognose abgegeben werden, mit welchem Ertrag für ein zukünftiges Zeitintervall gerechnet werden kann. Sobald ein vorgegebener positiver Leistungswert, insbesondere positive Leistungswerte, über ein vorgegebenes Zeitintervall vorliegen, wird die elektrischen Vorrichtung eingeschaltet.

Eine Regelung der elektrischen Vorrichtung erfolgt so, dass vom Gebäudestromnetz möglichst kein Strom an das Stromnetz abgegeben wird. Sobald die elektrische Vorrichtung in Betrieb ist wird deren Verbrauch so geregelt das am Energiemessgerät möglichst ein Leistungsdurchgang von null ermittelt wird.

Vorteilhaft erfolgt diese Regelung derart, dass immer ein gewisser Prozentsatz von Leistung an das Stromnetz abgegeben wird. Dieser Prozentsatz kann auch ein fester kleiner Leistungswert sein, zum Beispiel 10 W. Vorteilhaft ist der kleine Leistungswert möglichst gering und kleiner 10 W zum Beispiel auch ein Watt. Weist der Energieverbraucher beispielsweise ein Leistungsspektrum von 500 W bis 5 kW auf, so kann die Leistungsaufnahme der elektrischen Vorrichtung zwischen 500 W und 5 KW variiert werden.

Da zum einen die Erzeugung durch den Energieerzeuger schwankend sein kann, wie beispielsweise durch eine Fotovoltaikanlage oder eine in das Stromnetz integrierte Windenergieanlage, so kann durch eine vorteilhafte Variation im Leistungsspektrum zwischen beispielsweise 500 W und 5 KW eine Schwankung des Energieerzeugers ausgeglichen werden. Sobald gemäß der Erfindung vom Energiemessgerät eine Leistung, oder ein Strom, abweichend von einem Sollwert des Leistungsdurchgangs durch das Energiemessgerät ermittelt wird, wird die Leistung des Energieverbrauchers so angepasst, dass immer nur genau so viel Leistung an den Energieverbraucher abgegeben wird wie das Gebäudestromnetz zu viel zur Verfügung hat. Dies erfolgt wie oben beschrieben vorteilhaft in der Art, dass die Leistung des Energieverbrauchers, insbesondere der elektrischen Vorrichtung des Energieverbrauchers derart gewählt ist, dass im Energiemessgerät ein Sollwert erreicht ist. Dieser Sollwert ist vorzugsweise 0,1 Prozent der Leistung des Energieerzeugers oder des Energieverbrauchers, oder auch ein möglichst nahe null liegender Festwert einer Leistung, wie vorzugsweise ein Wert zwischen -50 bis +50 W. Vorteilhaft wird möglichst ein Wert gewählt der gerade über null liegt. So wird vermieden, dass ein Strombezug erfolgt der relativ teuer ist. Weiterhin wird vermieden, dass zu viel selbst erzeugte Energie an das Stromnetz abgegeben wird.

Demnach wird die Leistung der elektrischen Vorrichtung vorteilhaft gesteigert, wenn die im Energiemessgerät gemessene Leistung über dem Sollwert liegt, oder weiter über den Sollwert ansteigt. Die Leistung der elektrischen Vorrichtung wird vorteilhaft vermindert, sobald der Sollwert unterschritten ist oder weiter abfällt.

Der Energieverbraucher ist vorteilhaft eine Wärmepumpe wie insbesondere elektrische Wärmepumpen und andere Aggregate der Wärmepumpe. Wesentlichen Einfluss auf den Stromverbrauch hat ein elektrischer Verdichter. Dieser ist vorteilhaft ein mit einem Inverter geregelter Drehzahl variabler Verdichter. Sobald der Sollwert überschritten wird, wird die Drehzahl des Verdichters angehoben, sobald der Sollwert unterschritten wird, wird die Drehzahl vorteilhaft reduziert. Wird eine unterste Einsatzgrenze des Verdichters erreicht, muss die Anlage ganz abgeschaltet werden oder alternativ der Strombezug aus dem Netz in Kauf genommen werden. Im Falle eines Strombezugs aus dem Netz, um die Wärmepumpe weiter in Betrieb zu halten, wird diese vorteilhaft auf einen niedrigen Drehzahlwert eingestellt, insbesondere eine Minimaldrehzahl.

Vorteilhaft wird im Energiemanagementsystem, insbesondere vorteilhaft im Energiemessgerät selbst eine Historie der gemessenen Leistungsdaten ermittelt. Davon abhängig wird ein Stabilitätsfaktor ermittelt, der auf historischen Daten, zumindest über ein gewisses Zeitintervall zurückreicht. So wird beispielsweise ermittelt wie hoch der Überschussstrom über die letzte Stunde ausgefallen ist. Soweit hier ein Mindestwert erreicht ist, ist davon auszugehen, dass auch für die nächste Zeit relativ sicher Strom aus dem Stromnetz an die elektrische Vorrichtung geliefert werden kann. Hierzu benötigt die Anlage keine Internetverbindung. Sie arbeitet vorteilhaft autark und benötigt keine Werte vom Wechselrichter oder dem Energieerzeuger. Es wird vorteilhaft im Energiemessgerät überwacht ob Leistung an das Netz abgegeben wird oder ob Leistung bezogen wird.

In einer weiteren vorteilhaften Ausführung der Erfindung wird zusätzlich zu der Historie oder anstelle der Historie eine Wetterprognose mit in die Berechnung des Stabilitätsfaktors einbezogen. Soweit solide und stabile Wetterdaten, insbesondere ein Sonnenschein für eine Photovoltaikanlage oder eine stabile Gewinnprognose für eine Windenergieanlage vorliegen, kann der Energieverbraucher eingeschaltet werden. Vorteilhaft ist weiterhin eine nicht sofortige Einschaltung des Energieverbrauchers, sondern erst dann, wenn auf einen prognostizierten Endzeitpunkt die Einschaltung der elektrischen Vorrichtung und damit Erzeugung von thermischer Energie erfolgt. Nach Art einer "last order" wird die elektrische Vorrichtung erst zu einem späten oder spätestens möglichen Zeitpunkt eingeschaltet um bis zu einem vorgegebenen Zeitpunkt die Menge an thermischer Energie bereitgestellt zu haben oder eine Solltemperatur eines Heizsystems erreicht zu haben. Das Heizsystem kann ein wassergeführtes Heizsystem, ein luftgeführtes Heizsystem, ein Warmwasserspeicher oder auch ein Trinkwasserspeicher sein.

Gemäß einem weiteren vorteilhaften Ausführungsbeispiel ist der Energieverbraucher ein elektrischer Heizkörper. Dieser kann ein elektrischer Heizkörper eines Warmwasserspeichers oder aber auch einer Fußboden oder Wandheizung sein. Auch ein elektrisches Speicherheizgerät ist von der Erfindung umfasst, jedoch insbesondere der Art das die Leistung der elektrischen Heizkörper variabel ist. Der Energieverbraucher ist vorteilhaft von einem Wechselrichter oder Inverter angesteuert, sodass die Leistung des elektrischen Heizkörpers, des Warmwasserspeichers, einer Fußboden- oder Wandheizung variabel ist, und zwar derart variabel, dass die Leistung des elektrischen Heizkörpers abhängig von der überschüssigen Leistung des Gebäudestromnetzes angepasst wird. Dies erfolgt ähnlich wie bei der Wärmepumpe, nur, dass hier insbesondere keine zusätzliche thermische Umweltenergie vom Heizsystem selbst aufgenommen wird.

In eine Prognose können vorteilhaft neben der Historie, der Leistungsdaten, der Wetterprognose auf andere Daten des Gebäudes beispielsweise Nutzungsdaten berücksichtigt werden. So können in das Energiemanagementsystem weitere Nutzungsdaten eingegeben werden, wie Wochenprogramme, Urlaubs oder Spitzenzeiten sowie bestimmte Wohlgefühlprogramme für ein Gebäude. All dies hat einen Einfluss insbesondere auf die sogenannte Rückwärtssteuerung, also das späte einschalten gemäß dem bereits beschriebenen "last order" -Prinzip.

Es besteht keine Verbindung des Wechselrichters des Energieerzeugers oder des Energieerzeugers mit dem Datennetzwerk. Es besteht vorteilhaft eine Datenverbindung des Wechselrichters nur zum Router oder außerhalb des Datennetzwerks mit dem Internet, insbesondere besteht dabei keine Datenverbindung zum Energiemessgerät, dem Regler oder dem Internetkoppler und es werden keine Daten des Wechselrichters des Energieerzeugers oder des Energieerzeugers mit dem Datennetzwerk ausgetauscht.

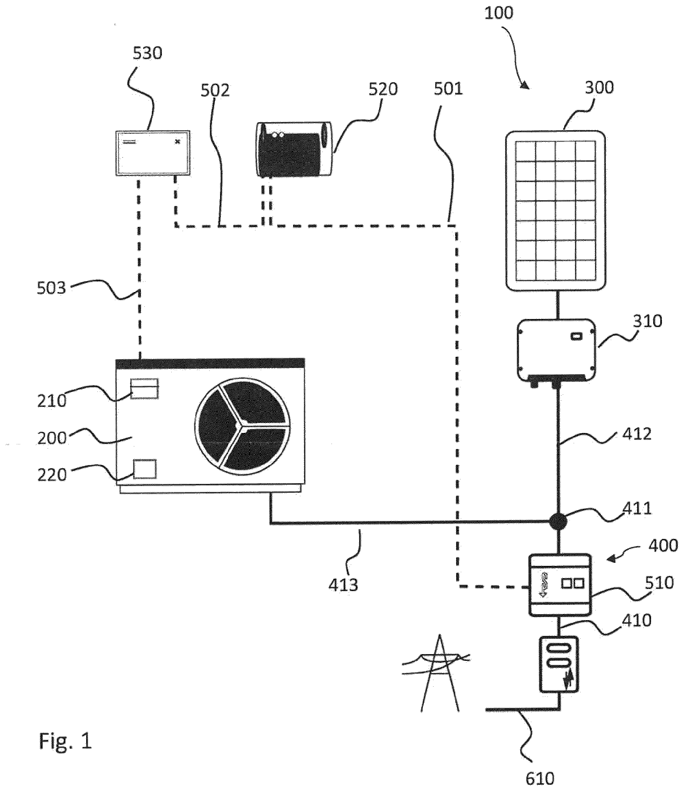

In der Figur ist ein Energiemanagementsystem gezeigt.

Das Energiemanagementsystem 100 besteht im Wesentlichen aus einem Gebäudestromnetz 400 und einem Datennetzwerk 500. Das Gebäudestromnetz 400 ist über eine Anschlussleitung 410 und einen Stromzähler 610 mit einer Hausanschlussleitung 601 an ein Stromnetz 600 angeschlossen. Vorteilhaft ist in oder an der Anschlussleitung 410 das Energiemessgerät 510 erfindungsgemäß eingebaut. Im Ausführungsbeispiel ist an einem Knoten 411 eine Verbraucheranschlussleitung 413 vorgesehen mit der der Energieverbraucher 200 an das Gebäudestromnetz 400 angeschlossen ist. Der Energieverbraucher 200 weist einen Regler 210 sowie eine elektrische Vorrichtung 220 auf. An dem Knoten 411 ist ein Wechselrichter 310 über eine Erzeugerleitung 412 angeschlossen. Am Wechselrichter 310 ist der Energieerzeuger 3200 angeschlossen.

Mit einer ersten Datenleitung 501 ist das Energiemessgerät 510 mit einem Router 520 verbunden. An den Router 520 ist weiterhin über eine zweite Datenverbindung 502 ein Internetkoppler 530 angebunden der weiterhin mit dem Regler 210 über eine dritte Datenverbindung 503 verbunden ist.

Im Ausführungsbeispiel ist als Energieverbraucher 200 eine Wärmepumpe mit einem integrierten Regler 210 gezeigt. Die elektrische Vorrichtung 220 einer Wärmepumpe ist hauptsächlich ein elektrischer Verdichter, der hier von dem Regler in seiner Drehzahl geregelt wird. Sobald also vom Energiemessgerät 510 eine positive Leistung, im Sinne einer Leistungsabgabe an das Stromnetz signalisiert wird, somit eine Leistung größer als ein Sollwert ist, wird der Energieverbraucher 220 der Wärmepumpe 200 in Betrieb genommen werden. Vorteilhaft erfolgt dies, wenn der vom Energiemessgerät ermittelte Leistungswert so groß ist wie eine minimale Leistung der elektrischen Vorrichtung 220.

Weist die elektrische Vorrichtung 220 eine minimale Leistung A, zum Beispiel 500 W auf, so wird die elektrische Vorrichtung vorteilhaft eingeschaltet, wenn ein Überschussstrom bzw. eine Überschussleistung von wenigstens annähernd einem Wert A, im Beispiel etwa 0,5 kW zur Verfügung steht.

In einem vorteilhaften Ausführungsbeispiel wird die elektrische Vorrichtung 220 bzw. der Energieverbraucher 200, hier die Wärmepumpe, bereits dann eingeschaltet, wenn eine gewisse negative Leistung, die vorteilhaft nahe dem Wert null liegt. Es kann von Vorteil sein, die elektrische Vorrichtung 220, schon bei einem negativen Leistungswert, also dann, wenn Strom aus dem Stromnetz bezogen wird, einzuschalten, insbesondere dann, wenn die Prognose so aussieht, dass zeitversetzt mit Erträgen zu rechnen ist. Dies wird insbesondere dann der Fall sein, wenn eine hohe thermische Leistung sofort benötigt wird. Dann macht es Sinn auch schon vor den hohen Stromerträgen eine Einschaltung vorteilhaft zu beginnen.

Es hängt vorteilhaft vom Sollwert ab, wann eine Einschaltung erfolgt. Vorteilhaft erfolgt eine Einschaltung dann, wenn eine minimale Leistung, die der elektrischen Vorrichtung entspricht mindestens vom Gebäudestromnetz bereitgestellt werden kann.

Vorteilhaft ist es aber auch schon bei einem Sollwert, der geringer ist als die Minimalleistung der elektrischen Vorrichtung, eine Einschaltung der Vorrichtung durchzuführen, insbesondere wenn eine thermische Leistung sofort zur Verfügung stehen muss.

Demnach wird dem Stabilitätswert vorteilhaft ein Bedarfswert hinzugefügt. Wird beispielsweise spontan eine höhere Raumtemperatur oder eine höhere Warmwassertemperatur gefordert so ist der Bedarfswert hoch und übersteigt möglicherweise den Stabilitätswert und beeinflusst die Summe aus Stabilitätswert und Bedarfswert. Durch einen hohen Bedarfswert wird der Sollwert insofern reduziert, als das eine Einschaltung auch schon bei einem Wert der Leistung, erfolgt die niedriger ist als die überschüssige von dem Energieerzeuger erzeugte Leistung.

Im Beispiel würde die Anlage vorteilhaft bereits bei schon einer Überschussleistung von 200 W eingeschaltet werden, obwohl der Verdichter der Wärmepumpe beispielsweise mindestens 500 Leistung benötigt. Fällt der Sollwert noch weiter ab bzw. ändert sich der Sollwert durch einen hohen Bedarfswert weiter, kann eine Einschaltung des Energieverbrauchers auch schon dann erfolgen, wenn sogar bereits aus dem Netz Strom bezogen wird.

## Patentansprüche

1. Energiemanagementsystem (100) mit einem Datennetzwerk und einem Gebäudestromnetz (400), wobei ein Energieverbraucher (200) mit einem Energieerzeuger (300) in das Gebäudestromnetz (400) integriert ist, welches Gebäudestromnetz (400) über einen an eine Anschlussleitung (410) angeschlossenen Stromzähler mit einem Stromnetz verbunden ist,
der Energieerzeuger (300) über einen Wechselrichter (310) über eine Erzeugerleitung (412) elektrisch an das Gebäudestromnetz (400) eingebunden ist,
der Energieverbraucher (200) mit einem elektrischen Verbraucheranschluss (413) der zwischen dem Wechselrichter (310) und dem Stromzähler liegt, an das Gebäudestromnetz (400) angeschlossen ist, wobei
ein Regler (210) des Energieverbrauchers (200) an das Datennetzwerk (500) angeschlossen ist,
wobei ein Energiemessgerät (510) mit einer Leistungsmesseinheit mit der Anschlussleitung (410) und dem Gebäudestromnetz (400) verbunden ist und das Energiemessgerät (510) mit einer ersten Datenverbindung (501) mit dem Datennetzwerk verbunden ist,
wobei das Energiemessgerät (510) ausgebildet ist, um die im Gebäudestromnetz (410) vom Energieerzeuger (300) erzeugte Energie abzüglich der im Gebäudestromnetz (400) verbrauchten Energie zu ermitteln, um einen Überschuss an Leistung zu bestimmen,
**dadurch gekennzeichnet,**
**dass** der Regler (210) ausgebildet ist, um abhängig von einem Wert des Überschusses an Leistung eine elektrische Vorrichtung (220) des Energieverbrauchers (200) zu steuern, und, sofern eine Leistung abweichend von einem Sollwert des Leistungsdurchgangs durch das Energiemessgerät (510) ermittelt wird, die Leistung des Energieverbrauchers (200) so anzupassen, dass immer nur genau so viel Leistung an den Energieverbraucher (200) abgegeben wird, wie das Gebäudestromnetz (400) an Überschuss zur Verfügung hat, und
wobei ausschließlich eine Verbindung über das Datennetzwerk zwischen den mit dem Gebäudestromnetz (400) verbundenen Energieverbraucher (200) und Energiemessgerät (510) besteht.

2. Energiemanagementsystem (100) nach Anspruch 1,
**dadurch gekennzeichnet,**
**dass** das Energiemessgerät (510) mit der ersten Datenverbindung (501) an einen Internetkoppler (530), an den Router (520) oder den Regler (210) angeschlossen ist.

3. Energiemanagementsystem (100) nach Anspruch 1 oder 2,
**dadurch gekennzeichnet,**
**dass** vom Energiemanagementsystem (100) der Regler (210) an den Internetkoppler (530),
der Internetkoppler (530) an den Router (520) und
das Energiemessgerät (510) an den Router (520) angeschlossen sind.

4. Verfahren zur Steuerung der Energieaufnahme einer elektrischen Vorrichtung (220) eines Energieverbrauchers (200) in einem Energiemanagementsystem (100) nach einem der Ansprüche 1 bis 3,
enthaltend die Verfahrensschritte,
dass im Energiemessgerät (510) eine Leistung L abhängig von einem Strom S, der durch die Anschlussleitung (410) fließt, ermittelt wird, die im Gebäudestromnetz (400) zur Verfügung steht, ermittelt wird, ob ein Überschuss an Leistung, die vom Energieerzeuger (300) in das Gebäudestromnetz (400) eingespeist ist, besteht und abhängig von einem Wert des Überschusses an Leistung die elektrischen Vorrichtung (220) mit dem Regler (210) des Energieverbrauchers (200) gesteuert wird, und sofern eine Leistung oder ein Strom abweichend von einem Sollwert des Leistungsdurchgangs durch das Energiemessgerät (510) ermittelt wird, die Leistung des Energieverbrauchers (200) so anzupassen, dass immer nur genau so viel Leistung an den Energieverbraucher (200) abgegeben wird, wie das Gebäudestromnetz (400) an Überschuss zur Verfügung hat.

5. Verfahren zur Steuerung der Energieaufnahme nach Anspruch 4,
enthalten den Verfahrensschritt,
dass abhängig vom Wert des Überschusses an elektrischer Leistung, die elektrische Vorrichtung (220) vom Regler (210) so gesteuert wird, dass zumindest ein Anteil des Überschusses an elektrischer Leistung des Gebäudestromnetzes (400) von der elektrischen Vorrichtung (220) des Energieverbrauchers (200) verbraucht wird.

6. Verfahren zur Steuerung der Energieaufnahme nach Anspruch 4 oder 5,
enthalten den Verfahrensschritt,
dass der elektrische Verbraucher (220) betrieben wird, wenn Strom vom Gebäudestromnetz (400) an das Stromnetz geliefert würde, womit zumindest weitgehend eine Einspeisung ins Stromnetz reduziert oder vermieden wird.

7. Verfahren zur Steuerung der Energieaufnahme nach Anspruch 4, 5 oder 6,
enthalten die Verfahrensschritte,
dass ein Strombezug vom Stromnetz oder eine Stromlieferung an das Stromnetz mit dem Energiemanagementsystem (100) mit einer verfügbaren Leistungsspanne der elektrischen Vorrichtung (220) gegen null geregelt wird, wobei ein Überschuss an elektrischer Leistung LÜ des Gebäudestromnetzes (400) an die elektrische Vorrichtung (220) abgegeben wird, wobei der Energieverbraucher (200) insbesondere eine Wärmepumpe oder eine Elektroheizeinrichtung ist, die Leistung des Energieverbrauchers (200) so gewählt wird, dass die Stromlieferung an das Stromnetz gegen null geregelt ist, so dass eine Optimierung einer Einspeisung, insbesondere eine Minimierung einer Einspeisung ins Stromnetz erfolgt.

8. Verfahren zur Steuerung der Energieaufnahme nach einem der Ansprüche 4 bis 7,
enthalten die Verfahrensschritte,
das mit einer Verfügbarkeitsprognosen von Überschuss an elektrischer Leistung im Energiemanagementsystem (100) ein Stabilitätswert für einen zukünftigen Ertrag des Energieerzeugers (300) ermittelt wird, die Verfügbarkeitsprognose insbesondere abhängig von historischen Energiewerten, die im Energiemessgerät (510) ermittelt wurden und/oder
abhängig von Wetterdaten prognostiziert ermittelt werden und das abhängig von einem Vergleich des Stabilitätswertes mit einem Sollstabilitätssollwert die Leistung der elektrischen Vorrichtung (220) vorgegeben wird, so dass ein störungsfreier Betrieb des Energieverbrauchers (200) über ein Zeitintervall erfolgt.

9. Verfahren zur Steuerung der Energieaufnahme nach einem der Ansprüche 4 bis 8,
enthalten die Verfahrensschritte,
dass mit dem elektrischen Verbraucher (200) abhängig vom Überschuss an Leistung eine thermische Energie erzeugt wird, insbesondere mit einer Rückwärtssteuerung, womit ein Sollwert an thermischer Energie oder eine Solltemperatur eines Heizsystems zu einem Endzeitpunkt eines Heizintervalls erreicht ist, wozu die elektrische Vorrichtung (220) erst dann eingeschaltet wird, wenn ein Zeitpunkt erreicht ist, von dem ab der zu erwartende Überschuss an elektrischer Leistung hinreichend ist, um die Menge an thermischer Energie oder die Solltemperatur zum Endzeitpunkt zu erreichen.

## Claims

1. An energy management system (100) comprising a data network and a building electricity network (400), wherein an energy consumer (200) comprising an energy generator (300) is integrated into the building electricity network (400), the building electricity network (400) being connected to an electricity network via an electricity meter connected to connecting cable (410),
the energy generator (300) is electrically incorporated into the building electricity network (400) via an inverter (310) via a generator cable (412),
the energy consumer (200) is connected to the building electricity network (400) by an electric consumer connection (413) located between the inverter (310) and the electricity meter, wherein
a controller (210) of the energy consumer (200) is connected to the data network (500),
wherein an energy measuring device (510) is connected to the connecting cable (410) and the building electricity network (400) by a power measuring unit, and the energy measuring device (510) is connected to the data network by a first data connection (501),
wherein the energy measuring device (510) is configured to determine the energy generated in the building electricity network (410) by the energy generator (300) minus the energy consumed in the building electricity network (400) to identify an excess of power,
**characterised in that**
the controller (210) is configured to control an electrical apparatus (220) of the energy consumer (200) dependent on a value of the excess of power, and, provided power deviating from a set value of power transmission is determined by the energy measuring device (510), to adjust the output of the energy consumer (200) such that only the exact amount of power is supplied to the energy consumer (200) at all times as the building electricity network (400) has available in excess, and wherein solely a connection via the data network exists between the energy consumer (200) connected to the building electricity network (400) and the energy measuring device (510).

2. The energy management system (100) according to claim 1,
**characterised in that**
the energy measuring device (510) is connected to an internet coupler (530), to the router (520) or the controller (210) by the first data connection (501).

3. The energy management system (100) according to claim 1 or 2,
**characterised in that**
the energy management system (100) connects the controller (210) to the internet coupler (530),
the internet coupler (530) to the router (520), and
the energy measuring device (510) to the router (520).

4. A method of controlling energy consumption of an electrical apparatus (220) of an energy consumer (200) in an energy management system (100) according to any of claims 1 to 3, including the method steps of:
determining, in the energy measuring device (510), a power L dependent on a current S flowing through the connecting cable (410), which is available in the building electricity network (400), determining whether an excess of power fed into the building electricity network (400) from the energy generator (300) exists, and controlling the electric apparatus (220) by the controller (210) of the energy consumer (200) dependent on a value of the excess of power, and, provided a power or a current deviating from a set value of the power transmission is determined by the energy measuring device (510), adjusting the output of the energy consumer (200) such that only the exact amount of power is supplied to the energy consumer (200) at all times as the building electricity network (400) has available in excess.

5. The method of controlling energy consumption according to claim 4, including the method step of:
controlling the electrical apparatus (220) by the controller (210) dependent on the value of the excess of electrical power such that at least a portion of the excess of electrical power of the building electricity network (400) is consumed by the electric apparatus (220) of the energy consumer (200).

6. The method of controlling energy consumption according to claim 4 or 5, including the method step of:
operating the electric consumer (220) when electricity would be supplied from the building electricity network (400) to the electricity network, thereby at least essentially reducing or avoiding feed-in into the electricity network.

7. The method of controlling energy consumption according to claim 4, 5 or 6, including the method steps of:
regulating the purchase of electricity from the electricity network or an electricity supply to the electricity network by the energy management system (100) towards zero using an available output range of the electric apparatus (220), wherein an excess of electrical power LÜ of the building electricity network (400) is delivered to the electric apparatus (220), wherein the energy consumer (200) is in particular a heat pump or an electric heating appliance, selecting the output of the energy consumer (200) such that the electricity supply to the electricity network is regulated towards zero, such that optimisation of feed-in, in particular minimising of feed-in occurs.

8. The method of controlling energy consumption according to any of claims 4 to 7, including the method steps of:
determining a stability value for future yield of the energy generator (300) by an availability prediction of excess of electrical power in the energy management system (100), the availability prediction depending in particular on historical energy values having been determined in the energy measuring device (510); and/or that are determined as a prediction dependent on weather data, and specifying the output of the electric apparatus (220) dependent on a comparison of the stability value and a set stability value, such that failure-free operation of the energy consumer (200) occurs over a period of time.

9. The method of controlling energy consumption according to any of claims 4 to 8, including the method steps of:
generating thermal energy by the electric consumer (200) dependent on the excess of power, in particular using reverse control, thereby achieving a set value of thermal energy or a set temperature of a heating system at an end time of a heating period, wherein, for this purpose, the electric apparatus (220) is only switched on when a point in time is reached, from which the expected excess of electrical power is sufficient to achieve the amount of thermal energy or the set temperature at the end time.

## Revendications

1. Système de gestion d'énergie (100) comportant un réseau de données et un réseau électrique de bâtiment (400), un consommateur d'énergie (200) avec un générateur d'énergie (300) étant intégré dans le réseau électrique de bâtiment (400), ledit réseau électrique de bâtiment (400) étant relié à un réseau électrique par le biais d'un compteur de courant raccordé à une ligne de raccordement (410),
le générateur d'énergie (300) étant intégré électriquement au réseau électrique de bâtiment (400) par le biais d'un onduleur (310) à l'aide d'une ligne de générateur (412),
le consommateur d'énergie (200) étant raccordé au réseau électrique de bâtiment (400) au moyen d'un raccordement électrique de consommateur (413) qui se trouve entre l'onduleur (310) et le compteur de courant,
un régulateur (210) du consommateur d'énergie (200) étant raccordé au réseau de données (500),
un appareil de mesure d'énergie (510) doté d'une unité de mesure de puissance étant relié à la ligne de raccordement (410) et au réseau électrique de bâtiment (400) et l'appareil de mesure d'énergie (510) étant relié au réseau de données au moyen d'une première liaison de données (501),
l'appareil de mesure d'énergie (510) étant conçu pour déterminer l'énergie générée dans le réseau électrique de bâtiment (410) par le générateur d'énergie (300) déduction faite de l'énergie consommée dans le réseau électrique de bâtiment (400) pour déterminer un excédent de puissance,
**caractérisé en ce que**
le régulateur (210) est conçu pour commander un dispositif électrique (220) du consommateur d'énergie (200) en fonction de la valeur de l'excédent de puissance et, dès lors qu'une puissance différente d'une valeur de consigne du passage de puissance est déterminée par l'appareil de mesure d'énergie (510), pour adapter la puissance du consommateur d'énergie (200) de telle manière que la quantité de puissance délivrée au consommateur d'énergie (200) est toujours exactement égale à l'excédent dont dispose le réseau électrique de bâtiment (400), et
dans lequel se trouve uniquement une liaison par le biais du réseau de données entre le consommateur d'énergie (200) relié au réseau électrique de bâtiment (400) et l'appareil de mesure d'énergie (510).

2. Système de gestion d'énergie (100) selon la revendication 1,
**caractérisé en ce que**
l'appareil de mesure d'énergie (510) est raccordé à un coupleur Internet (530), au routeur (520) ou au régulateur (210) au moyen de la première liaison de données (501).

3. Système de gestion d'énergie (100) selon la revendication 1 ou 2,
**caractérisé en ce que**
dans le système de gestion d'énergie (100), le régulateur (210) est raccordé au coupleur Internet (530),
le coupleur Internet (530) au routeur (520) et
l'appareil de mesure d'énergie (510) au routeur (520).

4. Procédé de commande de la consommation d'énergie d'un dispositif électrique (220) d'un consommateur d'énergie (200) dans un système de gestion d'énergie (100) selon l'une des revendications 1 à 3,
comportant les étapes de procédé selon lesquelles
une puissance L disponible dans le réseau électrique de bâtiment (400) est déterminée au niveau de l'appareil de mesure d'énergie (510) en fonction d'un courant S qui circule dans la ligne de raccordement (410), il est déterminé si un excédent de puissance, qui est injectée par le générateur d'énergie (300) dans le réseau électrique de bâtiment (400), est présent et, en fonction de la valeur de l'excédent de puissance, le dispositif électrique (220) est commandé au moyen du régulateur (210) du consommateur d'énergie (200) et, dès lors qu'une puissance ou un courant différents d'une valeur de consigne du passage de puissance sont déterminés par l'appareil de mesure d'énergie (510), la puissance du consommateur d'énergie (200) est adaptée de telle manière que la quantité de puissance délivrée au consommateur d'énergie (200) est toujours exactement égale à l'excédent dont dispose le réseau électrique de bâtiment (400).

5. Procédé de commande de la consommation d'énergie selon la revendication 4,
comportant l'étape de procédé selon laquelle
le dispositif électrique (220) est commandé par le régulateur (210) en fonction de la valeur de l'excédent de puissance électrique de telle manière qu'au moins une part de l'excédent de puissance électrique du réseau électrique de bâtiment (400) est consommée par le dispositif électrique (220) du consommateur d'énergie (200).

6. Procédé de commande de la consommation d'énergie selon la revendication 4 ou 5,
comportant l'étape de procédé selon laquelle
le consommateur électrique (220) fonctionne quand du courant serait fourni au réseau électrique par le réseau électrique de bâtiment (400), moyennant quoi une injection dans le réseau électrique est au moins en grande partie réduite ou évitée.

7. Procédé de commande de la consommation d'énergie selon la revendication 4, 5 ou 6,
comportant les étapes de procédé selon lesquelles
un approvisionnement en courant par le réseau électrique ou un apport de courant au réseau électrique sont régulés vers zéro au moyen du système de gestion d'énergie (100) avec une marge de puissance disponible du dispositif électrique (220), un excédent de puissance électrique LÜ du réseau électrique de bâtiment (400) étant délivré au dispositif électrique (220), le consommateur d'énergie (200) étant en particulier une pompe à chaleur ou une installation de chauffage électrique, la puissance du consommateur d'énergie (200) étant sélectionnée de telle manière que l'apport de courant au réseau électrique est régulé vers zéro de telle sorte qu'il se produit une optimisation de l'injection, en particulier une réduction au minimum de l'injection dans le réseau électrique.

8. Procédé de commande de la consommation d'énergie selon l'une des revendications 4 à 7,
comportant les étapes de procédé selon lesquelles
dans le système de gestion d'énergie (100), une valeur de stabilité pour un rendement futur du générateur d'énergie (300) est déterminée à l'aide d'un pronostic de disponibilité de l'excédent de puissance électrique, le pronostic de disponibilité étant déterminé de manière pronostiquée en particulier en fonction de valeurs d'énergie historiques qui ont été déterminées dans l'appareil de mesure d'énergie (510) et/ou
en fonction de données météorologiques et la puissance du dispositif électrique (220) est prédéfinie en fonction d'une comparaison de la valeur de stabilité avec une valeur de consigne de stabilité de telle sorte qu'il se produit un fonctionnement sans défaut du consommateur d'énergie (200) pendant un intervalle de temps.

9. Procédé de commande de la consommation d'énergie selon l'une des revendications 4 à 8,
comportant les étapes de procédé selon lesquelles
une énergie thermique est générée au moyen du consommateur électrique (200) en fonction de l'excédent de puissance, en particulier au moyen d'une commande rétroactive, moyennant quoi une valeur de consigne concernant l'énergie thermique ou une température de consigne relative à un système de chauffage est atteinte à un instant correspondant à la fin d'un intervalle de chauffage, ce pour quoi le dispositif électrique (220) n'est mis en marche que quand un instant est atteint à partir duquel l'excédent escompté de puissance électrique est suffisant pour atteindre la quantité d'énergie thermique ou la température de consigne audit instant de fin.
